# EUROPÄISCHE PATENTANMELDUNG

(11) **EP 1 400 602 A2**
(43) Veröffentlichungstag der Anmeldung: **24.03.2004**
(21) Anmeldenummer: 03450196.5
(22) Anmeldetag: 03.09.2003
(51) Int. Cl.: C21B 3/08, C04B 5/02

(54) **Verfahren zum Zerstäuben und Granulieren von Schmelzen sowie Vorrichtung zur Durchführung dieses Verfahrens**

(30) Priorität: 10.09.2002 AT 60302 U
(71) Anmelder: Tribovent Verfahrensentwicklung GmbH, 6700 Lorüns (AT)
(72) Erfinder: Edlinger, Alfred, 6780 Bartholomäberg (AT)
(74) Vertreter: Haffner, Thomas M.

(57) **Zusammenfassung**

Bei einem Verfahren zum Zerstäuben und Granulieren von Schmelzen, insbesondere flüssigen Schlacken, bei welchem an einem Tundishauslauf ein Sprühkopf mit einem zur Rotation antreibbaren Schleuderrad (9), dessen Rotationsachse (11) in Richtung der Achse des auslaufenden Schmelzestrahles (4) verläuft, sowie ein Kühlraum angeschlossen ist, wird der Schmelzestrahl (4) als Mantelstrahl mit einem Heißgas aus dem Tundish (1) ausgestoßen, und es trifft der Mantelstrahl (4) an von der Rotationsachse (11) des Schleuderrades (9) verschiedenen Stellen auf das Schleuderrad (9) auf.

## Beschreibung

Die Erfindung bezieht sich auf ein Verfahren zum Zerstäuben und Granulieren von Schmelzen, insbesondere flüssigen Schlacken, bei welchem an einem Tundishauslauf ein Sprühkopf mit einem zur Rotation antreibbaren Schleuderrad, dessen Rotationsachse in Richtung der Achse des auslaufenden Schmelzestrahles verläuft, sowie ein Kühlraum angeschlossen ist, sowie auf eine zur Durchführug dieses Verfahrens geeignete Vorrichtung.

In der AT 407 247 wurde bereits vorgeschlagen, eine Schmelze aus einem Schmelzentundish mit Fluid unter Druck auszustossen, wobei hier insbesondere Druckgas, Dampf oder Druckwasser in Richtung des Schlackenaustritts aus dem Tundish eingepreßt wurde. Der Schlackentundishauslauf erfordert bei derartigen Ausbildungen besondere Maßnahmen um zu verhindern, dass die Auslauföffnung zufriert und es wurde daher vorgeschlagen, ein höhenverstellbares Wehrrohr im Bereich des Schlackenauslaufes in den Tundish abzusenken, um die jeweils ausströmende Menge regulieren zu können, wobei der Treibgasstrahl koaxial zur Achse der Auslauföffnung eingebracht wurde und der Tundishauslauf unmittelbar in den Kühlraum mündet. Bei einer derartigen Ausbildung des Zerstäuberkopfes als Düse, in welche koaxial der Strahl einer Treibgaslanze mündet, muss in der Regel ein hoch überhitzter Dampf eingesetzt werden, um ein Zuwachsen der Öffnung zu verhindern, wobei je nach Zusammensetzung der Schmelze und insbesondere bei höherem Eisenoxidgehalt der Schmelze auch hohe Anforderungen an das Feuerfestmaterial gestellt werden. Analoges gilt für die Ausbildung des höhenverstellbaren Wehrrohres, welches bei aggressiven Schmelzen einem hohen Verschleiß unterworfen ist und daher eine aufwendige Regelung für die korrekte Einstellung der Höhenlage des Wehrrohres erfordert. Neben einer derartigen Ausbildung des Zerstäuberkopfes als Austrittsdüse aus einem Schlackentundish sind weitere Ausbildungen beispielsweise der AT 406 954 B zu entnehmen, wobei hier die flüssige Schlacke in eine unter Unterdruck stehende Expansionskammer eingesaugt wird und mit einem Treibstrahl in die Kühlzone transportiert wird.

In der AT 405 511 ist ein Verfahren zum Granulieren und zerkleinern von schmelzflüssigem Material beschrieben, bei welchem flüssige Schlacke im freien Fall mit Druckwasserstrahlen beaufschlagt wird, worauf die erstarrte und granulierte Schlacke gemeinsam mit dem gebildeten Dampf über eine pneumatische Förderleitung und einen Verteiler geführt wird. Das auf diese Weise verteilte Material kann unmittelbar in einer Strahlmühle weiter zerkleinert werden. Die prinzipiellen Abläufe beim Granulieren und Zerkleinern von schmelzflüssigem Material durch Beaufschlagen mit Dampf sind auch in der EP 683 824 B1 bereits beschrieben, wobei hier eine Mischkammer vorgesehen ist, in welche Wasser, Wasserdampf und/oder Luft-Wassergemische eingedüst werden, worauf das verdampfte Wasser gemeinsam mit dem erstarrten Material über einen Diffusor ausgestossen wird. Der Zerstäuberkopf ist bei einer derartigen Ausbildung als Mischkammer mit anschließendem Diffusor ausgebildet, wobei auch in diesem Fall schmelzflüssige Schlacke aus einem entsprechenden Vorratsgefäß oder einem Tundish zugeführt werden kann.

In der AT 407 152 B wird festes Material in einem Schmelzzyklon erschmolzen, wobei an den druckfest verschließbaren Schmelzzyklon unmittelbar ein Kühlraum angeschlossen ist, welcher in der Folge unter geringerem Druck als der Schmelzzyklon gehalten werden muss, um den Austritt des Materials aus dem Schmelzzyklon in den Kühlraum zu ermöglichen. Da bei einem derartigen Verfahren die erforderliche Schmelzwärme im Schmelzzyklon aufgebracht werden muss, wird bei der Verbrennung von Brennstoffen im Schmelzzyklon eine hohe Gasmenge erzeugt, welche in der Folge eine entsprechend aufwendige Reinigung erfordert. Eine Regelung eines derartigen Verfahrens ist nur in dem Umfang möglich, in dem voraussetzungsgemäß die entsprechende Schmelzwärme bereitgestellt wird, sodass insbesondere eine Reduktion der produzierten Gasmenge und eine Einstellung an die gewünschten Kühlbedingungen im Rahmen eines derartigen Schmelzzyklones nicht erzielt werden kann.

All diesen bekannten Ausbildungen gemeinsam ist der Umstand, dass für den Ausstoß der Schlacken hohe Mengen an Treibgasen, insbesondere Dampf eingesetzt werden, wobei Dampf in aller Regel stark überhitzt und Treibgase entsprechend hochvorgewärmt eingesetzt werden müssen. Neben der hohen zu erwärmenden Gasmenge besteht im Anschluss an die Zerstäubung ein relativ hoher Aufwand in der erforderlichen Reinigung der eingesetzten und gebildeten Gase, sodass der apparative Aufwand für die Gaserzeugung und die Gasreinigung relativ hoch ist.

Klassische Granulierverfahren sehen vor, dass Schmelzen bzw. Schlacken einfach in Kühlflüssigkeiten eingeleitet werden, wobei naturgemäß bei Verwendung von Wasser als Kühlflüssigkeit die Schlacken nur geringe Eisenanteile enthalten dürfen, um einen stabilen Betrieb zu gewährleisten. Bei der Trockengranulation gelangt die Schlacke auf Kühlbänder oder Kühlplatten, wofür in der Regel relativ großbauende Einrichtungen erforderlich sind. Schließlich wurde in der EP 1 234 889 zur Verringerung der erforderlichen Treibgasmenge ein Schleuderrad vorgeschlagen, wobei der Schmelzestrahl unmittelbar unter Zwischenschaltung eines konventionellen Schmelzenflussregelorganes, wie beispielsweise eines Feeders oder Tundishstopfens, auf das Schleuderrad gelangt, dessen Rotationsachse im wesentlichen mit der Achse des Tundishauslaufs übereinstimmte. Mit einer derartigen Ausbildung wurde zwar eine besonders kleinbauende Einrichtung geschaffen, wobei allerdings festgestellt wurde, dass wichtige Verfahrensparameter, welche für die Ausbidlung geeigneter Teilchengrößen relevant sind, mit zusätzlichen Maßnahmen und insbesondere mit Nachverbrennungsstrecken oder Nachheizstrecken modifiziert werden müssen, um eine akzeptable Teilchengröße zu erlangen. Um die Ausbildung von kleinen Tröpfchen sicherzustellen, wurden einzelne Abschnitte beheizt, um die gewünschte Viskosität zur Ausbildung der entsprechenden Tröpfchen auf die geforderten Werte zu bringen. Insgesamt ergab sich somit zwar eine kleinbauende, aber relativ komplizierte Einrichtug, bei welcher zusätzliche Brennkammern, Brenner und Nachverbrennungsstrecken zur Einstellung der gewünschten Teilchengröße herangezogen wurden.

Die vorliegende Erfindung zielt nun darauf ab, eine Einrichtung dieser letztgenannten Art dahin gehend weiterzubilden, dass ohne zusätzliche Einbauten und insbesondere ohne zusätzliche Brenner im Bereich des Tundishauslaufes das Auslangen gefunden werden kann und unmittelbar durch mechanische Kräfte eine entsprechend gute mechanische Zerteilung gewährleistet ist. Zur Lösung dieser Aufgabe besteht das erfindunggemäße Verfahren zu diesem Zwecke ausgehend von dem eingangs definierten Verfahren im wesentlich darin, dass der Schmelzestrahl als Mantelstrahl mit einem Heißgas aus dem Tundish ausgestoßen wird, und dass der Mantelstrahl an von der Rotationsachse des Schleuderrades verschiedenen Stellen auf das Schleuderrad auftrifft. Dadurch, dass in an sich bekannter Weise ein Mantelstrahl ausgebildet ist, wie er für Zerstäubungsarten mit hohem Treibgasbedarf vorgeschlagen wurde, wird nun die Möglichkeit geschaffen, die Schmelze außerhalb der Rotationsachse auf das rotierende Schleuderrad aufzubringen, wobei der Mantel in einem radialen Abstand von der Rotationsachse auf dem Schleuderrad auftrifft, welche dem halben Durchmesser des schlauchförmig austretenden Mantelstrahles entspricht. Der Mantelstrahl trifft hierbei gleichzeitig auf einer Kreisringfläche auf, wodurch der gewünschte radiale Abstand von der Rotationsachse zur Erzielung besonders hoher Beschleunigungskräfte erzielt wird, und gleichzeitig die mechanische Belastung des Schleuderrades entsprechend verringert wird, da ja die Schmelze immer gleichzeitig an einander diametral gegenüberliegenden Punkten in einem radialen Abstand von der Drehachse, und somit auf einem im wesentlichen koxialen Kreis auftrifft, sodass eine mechanische Überbelastung des Schleuderrades vermieden wird. Bedingt durch die kreisringförmige Auftrefffläche wird aber nun bei vergleichsweise geringer Drehzahl des Schleuderrads ein hohes Maß an Beschleunigung bewirkt und eine effiziente mechanische Zerteilung sichergestellt. Gleichzeitig gelingt es durch die Verwendung entsprechend heißer Treibgase im Inneren des Mantelstrahls, den mit einem überaus dünnen, filmartigen Mantel austretenden Strahl auf entsprechend hohen Temperaturen zu halten, sodass gesonderte Nachverbrennungs- bzw.

Nachheizstrecken entbehrlich sind, da ja unmittelbar bereits die gewünschten feinen Teilchen mit geringem Durchmesser das Schleuderrad verlassen.

Die erfindungsgemäße Vorrichtung zur Durchführung dieses Verfahren ist im wesentlichen dadurch gekennzeichnet, dass in den Tundish ein Wehrrohr zur Ausbildung eines Schmelzaustrittsspaltes am Rand der Auslauföffnung angeordnet ist, und dass an das Innere des Wehrrohres eine Heißgas bzw. Heißdampfleitung oder ein Brenner angeschlossen ist. Wesentlich für die erfindungsgemäße Vorrichtung und das erfindungsgemäße Verfahren ist hierbei der Umstand, dass das eingesetzte Heißgas bzw. der Heißdampf nicht als Treibstrahl eingesetzt werden muss, und daher nur in wesentlich geringeren Mengen eingebracht werden muss. Das Heißgas kann somit unmittelbar von üblichen Brennern erzeugt werden. Der Ausstoß der Schmelze unter Ausbildung eines filmartigen dünnen Schlauches wird im wesentlichen durch Einstellung der Höhenlage des Wehrrohres gewährleistet, welches den Ringspalt rund um die Auslauföffnung des Tundish definiert. Hier ist es lediglich wesentlich, dass bei vergleichsweise hoher Temperatur ein äußerst dünner Film gebildet wird, welcher auf entsprechend großem Durchmesser und damit mit entsprechend großem Abstand von der Rotationsachse auf das nachfolgende Schleuderrad auftrifft, wobei hier die Abstände zwischen Tundishauslauf und Schleuderrad auf ein Minimum reduziert werden können und weitere Bauhöhe eingespart werden kann, da in dieser Übergangsstrecke eine zusätzliche Beheizung nicht mehr erforderlich ist.

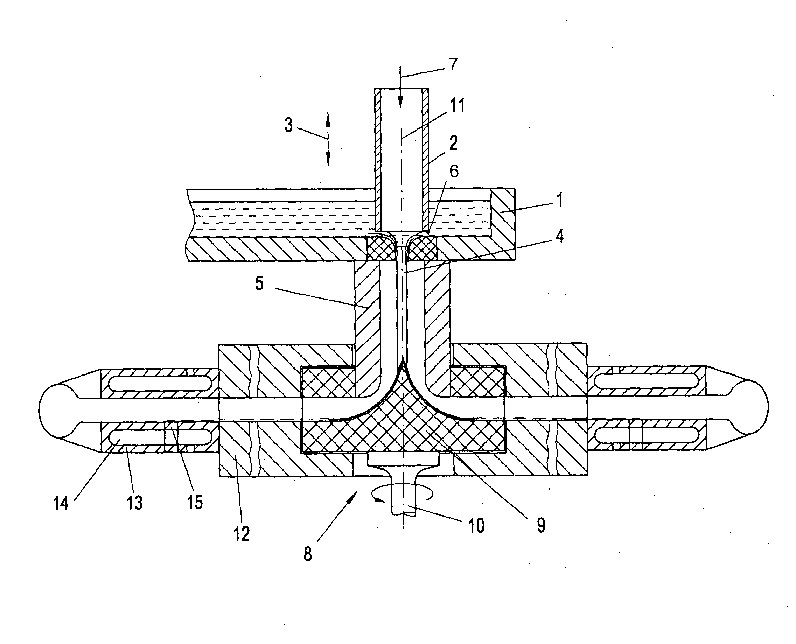

Die Erfindung wird nachfolgend anhand eines in der Zeichnung schematisch dargestellten Ausführungsbeispieles näher erläutert. In der Zeichnung ist mit 1 ein Schmelzentundish bezeichnet, dessen Schmelzeausflußregelorgan 2 als Wehrrohr ausgebildet ist und durch Anheben in Richtung des Doppelpfeiles 3 eine entsprechende Einstellung des Austrittsspaltes 6 zur Regulierung des jeweils ausströmenden, schlauchförmigen Schmelzestrahles 4 ermöglicht. Im Inneren des Wehrrohres 2 mündet eine Leitung für Heißgase bzw. Heißdampfe, wie mit 7 angedeutet ist, sodass die Schmelze als das Heißgas bzw. den Heizdampf umgebender Schlauch 4 austritt. Alternativ kann zur Ausbildung des Heißgases im Inneren des Wehrrohres auch ein Brenner angeordnet sein.

Druckdicht an den Tundish 1 ist ein Verbindungsrohr 5 angeschlossen, welches mit einer aus mehreren Abschnitten bestehenden Ringkammer 8 verbunden ist. Im ersten Abschnitt dieser Ringkammer 8 ist ein Schleuderrad 9 rotierbar gelagert, wobei die Rotationsachse 10 im wesentlichen mit der Achse 11 des Tundishauslaufes fluchtet. Die Schmelze bzw. Schlacke trifft somit auf das rotierende Schleuderrad 9 auf und wird in radialer Richtung in der Ringkammer 8 auswärts geschleudert. In einem ersten an das Schleuderrad anschließenden Abschnitt der Ringkammer, welcher mit 12 bezeichnet ist, erfolgt unmittelbar aufgrund der hohen Beschleunigung der Schmelze die Bildung feiner Tröpfchen, wobei eine Fadenbildung vermieden wird. Der äußere Bereich der Ringkammer 8 ist als ringförmige Kühlkammer 13 ausgebildet, dessen Wände doppelwandig ausgebildet sind. In den zwischen den Wänden eingeschlossenen Hohlraum 14 kann entsprechendes Kühlmittel eingeleitet werden. Zusätzlich sind Düsen 15 vorgesehen, über welche beispielsweise Kohlenwasserstoffe eingedüst werden, welche unter stark endothermer Zersetzung den feinen Schmelzetröpfchen rasch Wärme entziehen und auf diese Weise eine sichere Erstarrung und Abkühlung gewährleisten.

Das gebildete Mikrogranulat verläßt die ringförmige Kühlkammer am Umfang derselben insbesondere mit Temperaturen zwischen 200° und 500° C und kann außerhalb der Ringkammer gesammelt werden.

## Patentansprüche

1. Verfahren zum Zerstäuben und Granulieren von Schmelzen, insbesondere flüssigen Schlacken, bei welchem an einem Tundishauslauf ein Sprühkopf mit einem zur Rotation antreibbaren Schleuderrad, dessen Rotationsachse in Richtung der Achse des auslaufenden Schmelzestrahles verläuft, sowie ein Kühlraum angeschlossen ist, **dadurch gekennzeichnet, dass** der Schmelzestrahl als Mantelstrahl mit einem Heißgas aus dem Tundish ausgestoßen wird, und dass der Mantelstrahl an von der Rotationsachse des Schleuderrades verschiedenen Stellen auf das Schleuderrad auftrifft.

2. Vorrichtung zur Durchführung des Verfahren nach Anspruch 1, bei welchem an einem Tundishauslauf ein Sprühkopf mit einem zur Rotation antreibbaren Schleuderrad, dessen Rotationsachse in Richtung der Achse des auslaufenden Schmelzstrahles verläuft, sowie ein Kühlraum angeschlossen ist, **dadurch gekennzeichnet, dass** in den Tundish (1) ein Wehrrohr (2) zur Ausbildung eines Schmelzaustrittsspaltes (6) am Rand der Auslauföffnung angeordnet ist, und dass an das Innere des Wehrrohres (2) eine Heißgas bzw. Heißdampfleitung (7) oder ein Brenner angeschlossen ist.
